# EUROPÄISCHE PATENTSCHRIFT

(11) **EP 1 680 370 B1**
(45) Veröffentlichungstag und Bekanntmachung des Hinweises auf die Patenterteilung: **27.07.2011**
(21) Anmeldenummer: 03776632.6
(22) Anmeldetag: 06.11.2003
(51) Int. Cl.: C03B 33/033

(54) **VERFAHREN UND VORRICHTUNG ZUM BRECHEN GERITZTER GLASTAFELN**
METHOD AND DEVICE FOR BREAKING SCORED GLASS SHEETS
PROCEDE ET DISPOSITIF DE RUPTURE DE PLAQUES DE VERRE RAYÉES

(43) Veröffentlichungstag der Anmeldung: 19.07.2006
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred
(86) Internationale Anmeldenummer: PCT/AT2003/000331
(87) Internationale Veröffentlichungsnummer: WO 2005/044744

(56) Entgegenhaltungen:
- EP-A- 0 585 694
- EP-A- 1 334 953
- AT-B- 399 144
- CH-A- 683 917
- US-A- 3 865 673
- US-A- 5 165 585

## Beschreibung

Die Erfindung betrifft ein Verfahren zum Teilen einer Glastafel mit den Merkmalen des einleitenden Teils des unabhängigen Anspruch 1.

Aus der EP 0 585 694 A ist ein Verfahren zum Teilen einer Glastafel entlang einer in ihr erzeugten Ritzlinie, bei dem die Glastafel durch Niederhalten beidseits der Ritzlinie und durch Ausüben von Druck auf die der Ritzlinie gegenüberliegende Seite der Glastafel über die gesamte Länge dieser Ritzlinie mit auf der konvexen Seite der Glastafel angeordneter Ritzlinie gewölbt wird, wobei das Brechen der so vorgespannten Glastafel entlang der Ritzlinie ausgelöst wird, indem auf die Seite der Glastafel, in der die Ritzlinie vorgesehen ist, Druck ausgeübt wird, bekannt.

Die Erfindung betrifft weiters eine Vorrichtung, mit der Glastafeln, nachdem sie geritzt worden sind, gebrochen werden können.

Vorrichtungen zum Brechen von Glastafeln sind aus der US 5 857 603 A (= EP 0 564 758 A) und aus der US 5 165 585 A (= EP 0 457 751 A) bekannt.

Aus der AT 399 144 B ist ein Verfahren zum Brechen von Glastafeln entlang in der Glastafel erzeugter Ritzlinien bekannt, bei welchem die Glastafel so gebogen wird, dass die Ritzlinie auf der konvexen Seite der Glastafel liegt, und bei dem man die Glastafel an einem Ende der Ritzlinie biegt, indem man am Ende der Ritzlinie auf die der Ritzlinie gegenüberliegende Seite und zu beiden Seiten der Ritzlinie auf die die Ritzlinie tragende Seite der Glastafel Druck ausübt. Dabei wird zusätzlich an wenigstens einer Stelle, die im Abstand vom Ende der Ritzlinie liegt, im Bereich der Ritzlinie ausschließlich von der der Ritzlinie gegenüberliegenden Seite her auf die Glastafel Druck ausgeübt, um das Fortpflanzen des Bruches zu unterstützen.

Die EP 1 334 953 A beschreibt ein Verfahren zum Teilen von Glas, wobei die Glasoberfläche im Bereich einer gewünschten Trennlinie geritzt wird und anschließend eine Last derart in das Glas eingetragen wird, dass im Bereich der Ritzlinie der Bruch erfolgt, wobei die Last derart eingetragen wird, dass im Bereich der Ritzlinie eine langsame Rissausbreitung stattfindet, die zum Bruch führt. Problematisch bei den bekannten Vorrichtungen zum Brechen von Glastafeln (Brechtische) ist es, dass das Brechen von dicken Glastafeln, also Glastafeln mit einer Stärke von beispielsweise mehr als 8 mm - ganz gleich ob es sich um Flachglas oder Verbundglas mit wenigstens einer dickeren Glastafel handelt - problematisch ist. Insbesondere problematisch ist es, wenn mit den bekannten Vorrichtungen von solchen Glastafeln oder Verbundglasscheiben schmale Streifen abzutrennen sind.

Bei dem aus der EP 0 585 694 A bekannten Verfahren wird in einer Variante die Glastafel über die gesamte Länge der Ritzlinie gebogen und ebenfalls über die gesamte Länge der Ritzlinie erhöhter Druck ausgeübt, um die Glastafel entlang der Ritzlinie zu brechen. In einer alternativen Variante des Verfahrens der EP 0 585 694 A wird die Glastafel bloß an einem Ende der Ritzlinie zum Vorspannen durch Wölben belastet und ebenfalls nur an diesem Ende zusätzlich belastet, um den Bruch auszulösen.

Der Erfindung liegt die Aufgabe zugrunde, die bekannten Brechverfahren so weiterzuentwickeln, dass auch dicke Glastafeln problemlos gebrochen werden können.

Gelöst wird diese Aufgabe erfindungsgemäß mit einem Verfahren, das die Merkmale von Anspruch 1 aufweist.

Insoweit die Vorrichtung betroffen ist, wird die der Erfindung zugrundeliegende Aufgabe mit den Merkmalen des Vorrichtungshauptanspruches gelöst.

Bevorzugte und vorteilhafte Ausgestaltungen des erfindungsgemäßen Verfahrens einerseits und der erfindungsgemäßen Vorrichtung anderseits sind Gegenstand der abhängigen Unteransprüche.

Da bei dem erfindungsgemäßen Verfahren eine Glastafel im Bereich ihrer Ritzlinie durch Niederhalten beiderseits der Ritzlinie und durch Ausüben von Druck auf die der Ritzlinie gegenüberliegende Seite über die gesamte Länge dieser Ritzlinie im Sinne eines Wölbens der Glastafel mit auf der "konvexen" Seite angeordneter Ritzlinie vorgespannt wird und auf die "konvexe" Seite, also die Seite der Glastafel, auf der die Ritzlinie liegt, im Bereich eines Endes dieser Ritzlinie, also im Bereich eines Randes der Glastafel auf diese auf beiden Seiten der Ritzlinie, vorzugsweise punktförmig zusätzlich Druck ausgeübt wird, gelingt es, auch dicke Glastafeln und/oder schmale Streifen von Glastafeln problemlos abzutrennen.

Vorteilhaft bei dem erfindungsgemäßen Verfahren ist das Vorspannen der Glastafel im Sinne eines Wölbens (auch wenn dadurch die Glastafel praktisch nicht "gewölbt" wird), und die Maßnahme, dass das zusätzliche Ausüben von Druck auf die Glastafel lediglich im Bereich eines Endes der Ritzlinie und beidseits der Ritzlinie, entlang welcher die Glastafel zu öffnen ist, erfolgt. So wird der Bruch entlang der Ritzlinie ausgelöst.

Der zusätzliche Druck wird ausgeübt, nachdem die Glastafel über die gesamte Länge der Ritzlinie im Sinne eines Wölbens vorgespannt worden ist.

Dies gelingt auch, wenn die Glastafeln durch Anlegen von Unterdruck mit Hilfe von Saugköpfen beidseits der Ritzlinie niedergehalten werden und wenn Druck auf die Glastafel auf der der Ritzlinie gegenüberliegenden Seite von einer Brechleiste ausgeübt wird.

Der Druck zum Auslösen des Bruches kann auch schon während des Vorspannens, insbesondere im letzten Abschnitt des Vorspannens, ausgeübt werden.

Insoweit die Vorrichtung betroffen ist, ergibt sich eine einfache Konstruktion, da normale Glasschneidetische mit Saugern zum Niederhalten der Glastafel, welche Sauger in der Regel in eine Auflagefläche eines Glasschneidetisches eingelassen sind, und mit einer zwischen den Saugern angeordneten, hebbaren Brechleiste nur noch mit einem Werkzeug zum Ausüben von Druck in einem Randbereich der Glastafel/des Verbundglases ausgestattet werden brauchen.

Dieses Werkzeug zum Ausüben von Druck an einem Ende der Ritzlinie und beidseits derselben, also beidseits des Endes der Ritzlinie im Bereich des Randes einer Glastafel/Verbundglasscheibe, ist beispielsweise ein gabelförmig ausgebildetes Werkzeug mit zwei auf die Glasscheibe zum Ausüben von Druck anlegbaren Fingern.

Die freien mit der Glasscheibe in Eingriff kommenden Enden des Werkzeuges, insbesondere der Finger, können mit elastischen, beispielsweise teilzylinderförmigen, Körpern bestückt sein.

Vorteilhaft ist auch, wenn das im wesentlichen gabelförmige Werkzeug zum Ausüben von Druck verschwenkbar gelagert ist, wobei vorgesehen sein kann, dass es durch Federkraft in einer Null-Lage gehalten wird.

Weitere Einzelheiten und Merkmale des erfindungsgemäßen Verfahrens und der Vorrichtung der Erfindung ergeben sich aus der nachstehenden Beschreibung anhand der Zeichnungen.

Es zeigt:
Fig. 1 in Seitenansicht schematisch einen Glasschneidetisch (teilweise); und
Fig. 2 eine Draufsicht zu Fig. 1.

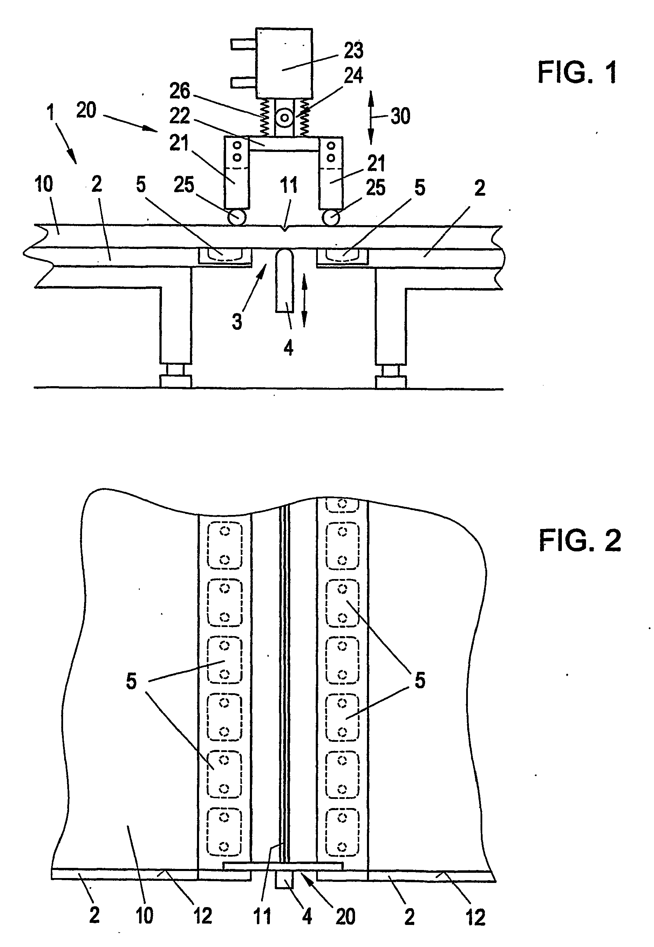

Wie in Fig. 1 gezeigt, besteht ein Glasschneidetisch 1 aus einem nicht näher bezeichneten Gestell mit zwei Tischplatten 2, zwischen denen ein Spalt 3 vorgesehen ist. Im Spalt 3 ist eine Brechleiste 4 durch einen nicht näher gezeigten Antrieb höhenverstellbar angeordnet, um auf eine auf dem Glasschneidetisch 1 liegende Glastafel 10 (oder Verbundglas), in der eine Ritzlinie 11 vorgesehen ist (die Ritzlinie 11 liegt an der Oberseite der Glastafel 10) von unten her Druck auszuüben.

Im Bereich der Ränder der Tischplatten 2, die dem Spalt 3 benachbart sind, sind zwei Reihen von Saugern 5 vorgesehen, um eine Glastafel 10 beidseits der Ritzlinie 11 von unten her durch Anlegen von Unterdruck festzuhalten, wenn die Brechleiste 4 gehoben wird.

Oberhalb der Tischplatte 2 ist im Bereich des einen Endes des Spaltes 3 ein Werkzeug 20 zum Ausüben von Druck auf die Oberseite der Glastafel 10 beidseits der Ritzlinie 11 vorgesehen. Dieses Werkzeug 20 ist im Bereich eines Randes 12 der Glastafel 10, also im Bereich eines Endes der Ritzlinie 11 in der Glastafel 10 angeordnet.

Gegebenenfalls kann das Werkzeug 20 verstellbar sein, um es jeweils gegenüber dem Rand 12 einer Glastafel 10 ausrichten zu können. Hiezu kann das Werkzeug 20 an einer nicht gezeigten Schneidebrücke, die üblicherweise Bestandteil von Glasschneidetischen ist, verfahrbar sein. Bevorzugt ist es, wenn das Werkzeug 20 an dem Schlitten befestigt ist, der auch den Schneidekopf für das Ritzen von Glastafeln/Verbundglas trägt.

Die Brechleiste 4 ist über ihre gesamte Länge gleichmäßig anhebbar, so dass sie über die gesamte Länge der Ritzlinie 11 von unten her auf die Glastafel 10 gleichmäßig Druck ausübt.

Beim Brechen einer Glasscheibe 10 entlang der vorher von ihr erzeugten Ritzlinie 11 wird erfindungsgemäß beispielsweise wie nachstehend beschrieben gearbeitet:
Zunächst wird eine Glastafel 10 auf dem Schneidetisch 1 so ausgerichtet, dass ihre - gegebenenfalls noch zu erzeugende - Ritzlinie 11 genau über der Brechleiste 4 zu liegen kommt. Dann werden die Saugköpfe 5, die unterhalb der Glastafel 10 angeordnet sind, mit Unterdruck beaufschlagt, so dass die Glastafel 10 im Bereich der beiden Reihen aus Saugern 5, also beidseits des Spaltes 3 gehalten wird. Nun wird die Hebeleiste 4 über ihre gesamte Länge gleichmäßig angehoben, so dass die Glastafel 10 im Sinne eines Wölbens vorgespannt wird. Das Vorspannen erfolgt derart, dass die Ritzlinie 11 auf der "konvexen" Seite der Glastafel 10, im gezeigten Ausführungsbeispiel der Oberseite der Glastafel 10, liegt. Sobald die Vorspannung den gewünschten Wert erreicht hat (das Ausmaß des Vorspannens wird durch die Haltekraft der Sauger 5 bestimmt), wird das Druckwerkzeug 20 in Richtung des Doppelpfeiles 30 durch einen Linearmotor 23 abgesenkt und seine Finger 21 gelangen mit ihren mit elastischen Körpern 25 bestückten Enden in Anlage auf die Seite der Glastafel 10, in der die Ritzlinie 11 vorliegt. Die elastischen Körper 25 haben beispielsweise wenigstens in ihrem nach unten weisenden Bereich in dem Bereich sie mit der Glastafel 10 in Anlage kommen, eine zylinderförmige Außenkontur. Durch den von den Fingern 21 des Druckwerkzeuges 20 auf die Oberseite der Glastafel 10 im Bereich des Endes der ihr erzeugten Ritzlinie 11, insbesondere im wesentlichen punktförmig, auf beiden Seiten der Ritzlinie 11 ausgeübten Druck wird der Bruch, der wie zuvor beschrieben, vorgespannten Glastafel 10 ausgelöst und die Glastafel 10 bricht sauber entlang der Ritzlinie 11.

In Fig. 1 ist gezeigt, dass das Druckwerkzeug 20 mit dem Kolben des Linearmotors 23 über ein Gelenk 24 verbunden ist. So ist sichergestellt, dass von beiden Fingern 21 über ihre elastischen Körper 25 zu beiden Seiten der Ritzlinie 11 gleichmäßig Druck auf die Glastafel 10 ausgeübt wird. Dabei kann auch vorgesehen sein, dass dem Gelenk 24 eine Feder 26 zugeordnet ist, die dafür sorgt, dass der Steg 22 des Druckwerkzeuges 20 bei einem nicht auf eine Glastafel 10 aufgesetzten Werkzeug 20 im wesentlichen horizontal ausgerichtet ist.

Die Finger 21 können am Steg 22 des Werkzeuges 20 verstellbar angeordnet sein, so dass sie entsprechend den jeweils gegebenen Verhältnissen angepasst und justiert werden können.

Die erfindungsgemäße Vorrichtung und das erfindungsgemäße Verfahren ist für das Teilen ("Schneiden") von Flachglas und von Verbundglas anwendbar.

Zusammenfassend kann ein Ausführungsbeispiel der Erfindung wie folgt beschrieben werden:
Zum Brechen von Glastafeln 10, insbesondere dicker Glastafeln, sind in einem Glasschneidetisch 1 beidseits eines Spaltes 3 zwischen den Tischplatten 2 zwei Reihen von Saugern 5 vorgesehen. Im Spalt 3 ist hebbar eine Brechleiste 4 vorgesehen. Oberhalb des Spaltes 3 ist an einem Ende desselben ein Druckwerkzeug 20 mit zwei Fingern 21 vorgesehen. Durch Beaufschlagen der Sauger 5 mit Unterdruck wird eine Glasscheibe 2 beidseits des Spaltes 3 festgehalten und mit Hilfe der Hebeleiste 4, die über die gesamte Länge der Glastafel 10 im Bereich der Ritzlinie 11 gleichmäßig angehoben wird, im Sinne eines Wölbens mit auf der "konvexen" Seite der Wölbung angeordneter Ritzlinie 11 vorgespannt. Durch das Druckwerkzeug 20 wird lediglich im Bereich eines Endes der Ritzlinie 11 von oben her auf die so vorgespannte Glastafel 10 in ihrem Randbereich 12 beidseits der Ritzlinie 11 Druck ausgeübt und so der Bruch der vorgespannten Glastafel 10 entlang der Ritzlinie 11 ausgelöst.

## Patentansprüche

1. Verfahren zum Teilen einer Glastafel (10) entlang einer in ihr erzeugten Ritzlinie (11), bei dem die Glastafel (10) durch Niederhalten beidseits der Ritzlinie (11) und durch Ausüben von Druck auf die der Ritzlinie (11) gegenüberliegende Seite der Glastafel (10) über die gesamte Länge dieser Ritzlinie (11) mit auf der "konvexen" Seite der Glastafel (10) angeordneter Ritzlinie (11) gewölbt wird, wodurch die Glastafel (10) durch das Wölben mit auf der konvexen Seite der Wölbung der Glastafel (10) liegender Ritzlinie (11) vorgespannt wird, **dadurch gekennzeichnet, dass** das Brechen der so vorgespannten Glastafel (10) entlang der Ritzlinie (11) ausgelöst wird, indem nach dem Vorspannen beidseits der Ritzlinie (11) lediglich im Bereich eines Endes der Ritzlinie (11) auf die Seite der Glastafel (10), in der die Ritzlinie (11) vorgesehen ist, zusätzlich Druck ausgeübt wird.

2. Verfahren nach Anspruch 1, **dadurch gekennzeichnet, dass** das Vorspannen der Glastafel (10) **dadurch** erfolgt, dass die Glastafel (10) beidseits der Ritzlinie (11) durch mit Unterdruck beaufschlagte Sauger (5) niedergehalten und von der der Ritzlinie (11) gegenüberliegenden Seite der Glastafel (10) über eine Brechleiste (4) Druck auf die Glastafel (10) ausgeübt wird, wobei die Richtung des von der Brechleiste (4) ausgeübten Drucks der Wirkrichtung der Sauger (5) entgegengesetzt ist.

3. Verfahren nach Anspruch 1 oder 2, **dadurch gekennzeichnet, dass** auf die vorgespannte Glastafel (10) im Bereich eines Randes (12) derselben mit Hilfe eines Druckwerkzeuges mit zwei Druckfingern (21) Druck ausgeübt wird, um den Bruch auszulösen.

4. Verfahren nach Anspruch 2 oder 3, **dadurch gekennzeichnet, dass** durch die Brechleiste (4) über die ganze Länge der Ritzlinie (11) gleichmäßiger Druck auf die Glastafel (10) ausgeübt wird.

5. Vorrichtung zum Durchführen des Verfahrens nach einem der Ansprüche 1 bis 4, mit einer Auflage mit zwei Tischplatten (2) für eine zu teilende Glastafel (10), in der eine Ritzlinie (11) vorgesehen ist, mit im Bereich eines Spaltes (3) zwischen den Tischplatten (2) angeordneten Vorrichtungen (5) zum Niederhalten der Glastafel (10) und mit einer im Spalt (3) vorgesehenen höhenverstellbaren Brechleiste (4), **dadurch gekennzeichnet, dass** ein Druckwerkzeug (20) vorgesehen ist, das lediglich im Bereich eines Endes der Ritzlinie (11) der Glastafel (10) Druck auf die Seite der Glastafel (10) ausübt, in der die Ritzlinie (11) vorgesehen ist, dass das Druckwerkzeug (20) im wesentlichen gabelförmig mit zwei auf die Glastafel (10) gerichteten Fingern (21) ausgeführt ist, dass das Druckwerkzeug (20) in einer Richtung normal (Pfeil 30) zu den Tischplatten (2) mit Hilfe eines Linearmotors (23) verstellbar ist, und dass die Vorrichtungen zum Niederhalten einer Glastafel (10) beidseits des Spaltes (3) zwischen den Tischplatten (2) vorgesehene Sauger (5) sind.

6. Vorrichtung nach Anspruch 5, **dadurch gekennzeichnet, dass** die Finger (21) an ihren freien Enden mit Körpern (25) aus elastischem Werkstoff ausgestattet sind.

7. Vorrichtung nach Anspruch 6, **dadurch gekennzeichnet, dass** das Druckwerkzeug (20) an dem Kolben des Linearmotors (23) verschwenkbar (24) angeordnet ist.

8. Vorrichtung nach Anspruch 7, **dadurch gekennzeichnet, dass** eine Feder (26) vorgesehen ist, welche das Druckwerkzeug (20) in seiner Null-Stellung hält.

9. Vorrichtung nach einem der Ansprüche 5 bis 8, **dadurch gekennzeichnet, dass** die Finger (21) des Druckwerkzeuges (20) an einem Steg (22) justierbar befestigt sind.

10. Vorrichtung nach einem der Ansprüche 5 bis 9, **dadurch gekennzeichnet, dass** das Druckwerkzeug (20) in Richtung der Ritzlinie (11) und des Spaltes (3) zwischen den Tischplatten (2) verstellbar ist.

## Claims

1. A method for splitting a glass sheet (10) along a score line (11) produced in the latter, wherein the glass sheet (10) is arched over the whole length of this score line (11) with score line (11) disposed on the "convex" side of the glass sheet (10) by holding-down on both sides of the score line (11) and by exerting pressure on the side of the glass sheet (10) lying opposite to the score line (11), as a result of which the glass sheet (10) is prestressed by the arching with the score line (11) lying on the convex side of the arching of the glass sheet (10), **characterised in that** the snapping of the glass sheet (10) thus prestressed is triggered along the score line (11), wherein, after the prestressing on both sides of the score line (11), pressure is additionally exerted only in the region of an end of the score line (11) on the side of the glass sheet (10) in which the score line (11) is provided.

2. The method according to claim 1, **characterised in that** the prestressing of the glass sheet (10) takes place in such a way that the glass sheet (10) is held down on both sides of the score line (11) by suckers (5) acted upon by a partial vacuum and pressure is exerted on the glass sheet (10) by means of a snapping bar (4) from the side of the glass sheet (10) lying opposite the score line (11), wherein the direction of the pressure exerted by the snapping bar (4) is opposite to the direction of the action of the suckers (5).

3. The method according to claim 1 or 2, **characterised in that** pressure is exerted to trigger the snapping with the aid of a pressing tool with two pressing fingers (21) on the prestressed glass sheet (10) in the region of an edge (12) thereof.

4. The method according to claim 2 or 3, **characterised in that** uniform pressure is exerted on the glass sheet (10) by means of the snapping bar (4) over the whole length of the score line (11).

5. A device for carrying out the method according to any one of claims 1 to 4, with a support with two table plates (2) for a glass sheet (10) to be split in which a score line (11) is provided, with devices (5) for holding down the glass sheet (10) and being disposed in the region of a gap (3) between the table plates (2) and with a height-adjustable snapping bar (4) provided in the gap (3), **characterised in that** a pressing tool (20) is provided, which exerts pressure on the side of the glass sheet (10), in which the score line (11) is provided, solely in the region of an end of the score line (11) of the glass sheet (10), that the pressing tool (20) is essentially constituted fork-shaped with two fingers (21) directed towards the glass sheet (10), that the pressing tool (20) can be displaced in a direction normal (arrow 30) to the table plates (2) by means of a linear motor (23), and that the devices for holding down a glass sheet (10) are suckers (5) provided on both sides of the gap (3) between the table plates (2).

6. The device according to claim 5, **characterised in that** the fingers (21) are provided at their free ends with bodies (25) of elastic material.

7. The device according to claim 6, **characterised in that** the pressing tool (20) is disposed in a swivellable manner on the piston of a linear motor (23).

8. The device according to claim 7, **characterised in that** a spring (26) is provided, which holds the pressing tool (20) in its zero position.

9. The device according to any one of claims 5 to 8, **characterised in that** the fingers (21) of the pressing tool (20) are fixed in an adjustable manner to a bridge (22).

10. The device according to any one of claims 5 to 9, **characterised in that** the pressing tool (20) can be displaced in the direction of the score line (11) and the gap (3) between the table plates (2).

## Revendications

1. Procédé pour séparer une plaque de verre (10) le long d'une ligne de fissure (11) réalisée dans celle-ci, dans lequel la plaque de verre (10) est bombée par un maintien vers le bas des deux côtés de la ligne de fissure (11) et par l'exercice d'une pression sur le côté de la plaque de verre (10) opposé à la ligne de fissure (11) sur toute la longueur de cette ligne de fissure (11), avec la ligne de fissure (11) placée sur le côté « convexe » de la plaque de verre (10), ce par quoi la plaque de verre (10), de par le fait d'être bombée avec la ligne de fissure (11) reposant sur le côté convexe du bombement de la plaque de verre (10), est précontrainte, **caractérisé en ce que** la cassure de la plaque de verre (10) ainsi précontrainte le long de la ligne de fissure (11) est déclenchée **en ce qu'**après la précontrainte, on exerce une pression supplémentaire uniquement au niveau d'une extrémité de la ligne de fissure (11) sur le côté de la plaque de verre (10) dans lequel la ligne de fissure (11) est prévue.

2. Procédé selon la revendication 1, **caractérisé en ce que** la précontrainte de la plaque de verre (10) s'effectue **en ce que** la plaque de verre (10) est maintenue vers le bas des deux côtés de la ligne de fissure (11) par des ventouses (5) alimentées en dépression et, que depuis le côté de la plaque de verre (10) opposé à la ligne de fissure (11), une pression est exercée sur la plaque de verre (10) par le biais d'une baguette de rupture (4), sachant que la direction de la pression exercée par la baguette de rupture (4) est opposée à la direction active des ventouses (5).

3. Procédé selon la revendication 1 ou 2, **caractérisé en ce qu'**une pression est exercée sur la plaque de verre (10) précontrainte au niveau d'un bord (12) de celle-ci à l'aide d'un outil presseur présentant deux doigts presseurs (21), afin de déclencher la rupture.

4. Procédé selon la revendication 2 ou 3, **caractérisé en ce qu'**une pression égale est exercée par la baguette de rupture (4) sur toute la longueur de la ligne de fissure (11) sur la plaque de verre (10).

5. Dispositif pour exécuter le procédé selon l'une des revendications 1 à 4, comprenant un support avec deux plateaux de table (2) pour une plaque de verre (10) à séparer, dans laquelle une ligne de fissure (11) est prévue, comprenant des dispositifs (5) placés au niveau d'une fente (3) entre les plateaux de table (2) pour maintenir la plaque de verre (10) vers le bas et comprenant une baguette de rupture (4) réglable en hauteur prévue dans la fente (3), **caractérisé en ce qu'**un outil presseur (20) est prévu qui exerce une pression uniquement au niveau d'une extrémité de la ligne de fissure (11) de la plaque de verre (10) sur le côté de la plaque de verre (10) dans lequel la ligne de fissure (11) est prévue, que l'outil presseur (20) est essentiellement fourchu avec deux doigts (21) dirigés sur la plaque de verre (10), que l'outil presseur (20) est réglable à l'aide d'un moteur linéaire (23) dans une direction normale (flèche 30) par rapport aux plateaux de table (2) et que les dispositifs pour maintenir une plaque de verre (10) vers le bas sont des ventouses (5) prévues des deux côtés de la fente (3) entre les plateaux de table (2).

6. Dispositif selon la revendication 5, **caractérisé en ce que** les doigts (21) sont munis sur leurs extrémités libres de corps (25) en matériau élastique.

7. Dispositif selon la revendication 6, **caractérisé en ce que** l'outil presseur (20) est placé en pouvant pivoter (24) sur le piston du moteur linéaire (23).

8. Dispositif selon la revendication 7, **caractérisé en ce qu'**un ressort (26) est prévu qui maintient l'outil presseur (20) à sa position zéro.

9. Dispositif selon l'une des revendications 5 à 8, **caractérisé en ce que** les doigts (21) de l'outil presseur (20) sont fixés de manière ajustable sur une barre (22).

10. Dispositif selon l'une des revendications 5 à 9, **caractérisé en ce que** l'outil presseur (20) est réglable en direction de la ligne de fissure (11) et de la fente (3) entre les plateaux de table (2).
